# EUROPEAN PATENT SPECIFICATION

(11) **EP 4 266 748 B1**
(45) Date of publication and mention of the grant of the patent: **06.08.2025**
(21) Application number: 21939654.6
(22) Date of filing: 06.05.2021
(51) Int. Cl.: H04W 48/18, H04W 74/0833, H04W 36/00

(54) **RANDOM ACCESS METHOD, TERMINAL DEVICE, AND COMPUTER-READABLE STORAGE MEDIUM**
DIREKTZUGRIFFSVERFAHREN, ENDGERÄTEVORRICHTUNG UND COMPUTERLESBARES SPEICHERMEDIUM
PROCÉDÉ D'ACCÈS ALÉATOIRE, DISPOSITIF TERMINAL, ET SUPPORT DE STOCKAGE LISIBLE PAR ORDINATEUR

(43) Date of publication of application: 25.10.2023
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); YANG, Haorui, Dongguan, Guangdong 523860 (CN)
(74) Representative: Novagraaf Technologies
(86) International application number: PCT/CN2021/091963
(87) International publication number: WO 2022/233006

(56) References cited:
- EP-A1- 3 589 064
- WO-A1-2021/077267
- WO-A1-2021/183870
- CN-A- 112 042 225
- CN-A- 112 118 629
- US-A1- 2020 059 987
- US-A1- 2022 400 421
- OPPO: "Consideration on slice-specific cell (re)selection", vol. RAN WG2, no. E-meeting; 20210101, 15 January 2021 (2021-01-15), XP051973991, Retrieved from the Internet <URL:https://ftp.3gpp.org/tsg_ran/WG2_RL2/TSGR2_113-e/Docs/R2-2100894.zip R2-2100894 - Consideration on slice-specific cell (re)selection.doc> [retrieved on 20210115]
- QUALCOMM INCORPORATED: "Slice specific RACH", vol. RAN WG2, no. E-Conference; 20210412 - 20210420, 2 April 2021 (2021-04-02), XP052174325, Retrieved from the Internet <URL:https://ftp.3gpp.org/tsg_ran/WG2_RL2/TSGR2_113bis-e/Docs/R2-2102697.zip R2-2102697 - Slice specific RACH.doc> [retrieved on 20210402]

## Description

### TECHNICAL FIELD

The present disclosure relates to the technical field of communications, and in particular to a method for random access, a terminal device and a non-transitory computer-readable storage medium.

### BACKGROUND

With the increase of communication requirements, wireless communication networks need to cope with various emerging application scenarios, such as Enhanced Mobile Broad Brand (EMBB), Ultra-reliable Low Latency Communication (URLLC), Massive Internet of Things (MIoT), Verticle to Everything (V2X), etc. Therefore, the 5th Generation Mobile Communication Technology (also referred to as 5th Generation Wireless Systems, 5G) began to support a network slicing function, that is, different service requirements use different network slices, so that a terminal device can use a corresponding network slice for a required service. The terminal device needs to initiate random access to a network to establish a connection when there is a service requirement. However, in the process of random access, the terminal device does not consider a network slice corresponding to the service requirement of the terminal device, which leads to the poor support effect of the network device on performance of the network slice.

CN112042225A discloses a cell reselection method, a cell reselection device, and a storage medium. The cell reselection method includes: determining network slice information, which represents slices supported by each tracking area under a same registration area; and performing cell reselection based on the network slice information.

EP3589064A1 discloses a method at a user equipment, which includes: receiving third information from a source cell, where the third information is based on first information and second information, the first information including information about at least one network slice supported by at least one neighboring cell of the source cell and the second information including information regarding at least one network slice supported by the user equipment, and establishing a connection with a target cell based on the third information.

WO2021/077267A1 discloses a cell reselection method and apparatus, and a communication device. The cell reselection method is applied to a terminal, and includes: receiving a system message, where the system message includes network slice information of a network slice supported by a neighboring cell; and performing cell reselection according to the network slice information.

OPPO: "Consideration on slice-specific cell (re)selection", 3GPP DRAFT; R2-2100894, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, RAN WG2, E-meeting; 15 January 2021 discusses open issues on cell (re)selection mechanism. It is proposed that: RAN2 confirms slice related information can be indicated by SIB, including e.g. slice identity and per-slice frequency priority. If RAN2 agrees to resolve security concern on S-NSSAI exposure, slice identity can be represented by slice index or slice group index. RAN2 confirms slice related cell reselection info can be indicated in RRCRelease message, including e.g. slice identity and per-slice frequency priority. RAN2 considers to indicate the "restricted area" for the usage of per-slice frequency priority indicated in RRCRelease message.

QUALCOMM INCORPORATED: "Slice specific RACH", 3GPP DRAFT; R2-2102697, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE RAN WG2, E-Conference; 2 April 2021 discusses slice specific RACH. The work item aims to standardize the enhancement on RAN support of network slicing. Detailed objectives of the work item are: 2. Support slice based RACH configuration, specify mechanisms and signalling including, for Mobile Originating cases [RAN2]. a. Configure separated PRACH configuration (e.g., transmission occasions of time-frequency domain and preambles) for slice or slice group. b. Configure RACH parameters prioritization (e.g., *scalingFactorBI* and *powerRampingStepHighPriority)* for slice or slice group. c. Determine how this works with existing functionality.

### SUMMARY

The present invention is set out in the appended set of claims.

The claimed invention provides a method for random access, a terminal device and a non-transitory computer-readable storage medium, which improve the support effect of the network device on performance of the network slice.

In accordance with the invention, a method for random access is provided in claim 1.

In accordance with the invention, a terminal device is provided in claim 12.

In accordance with the invention, a non-transitory computer-readable storage medium is provided in claim 13.

Embodiment of the present disclosure provides a random access method, a terminal device and a computer-readable storage medium. The terminal device performs random access based on required first network slice information. In this way, based on the required first network slice information, the terminal device can perform the random access by using an appropriate random access resource, thereby improving the support effect of the network device on the performance of random access.

### BRIEF DESCRIPTION OF THE DRAWINGS

FIG. 1 is a block diagram of an optional communication system according to an embodiment of the present disclosure.
FIG. 2 is a schematic diagram of an optional 5G architecture according to an embodiment of the present disclosure.
FIG. 3 is a flowchart of an optional random access method according to an embodiment of the present disclosure.
FIG. 4 is a schematic diagram of an optional random access procedure according to an embodiment of the present disclosure.
FIG. 5 is a schematic diagram of an optional random access procedure according to an embodiment of the present disclosure.
FIG. 6 is a schematic diagram of an optional random access procedure according to an embodiment of the present disclosure.
FIG. 7 is a flowchart of an optional random access method according to an embodiment of the present disclosure.
FIG. 8 is a flowchart of an optional random access method according to an embodiment of the present disclosure.
FIG. 9 is a schematic structural composition diagram of an optional terminal device according to an embodiment of the present disclosure.
FIG. 10 is a schematic structural composition diagram of an optional terminal device according to an embodiment of the present disclosure.

### DETAILED DESCRIPTION

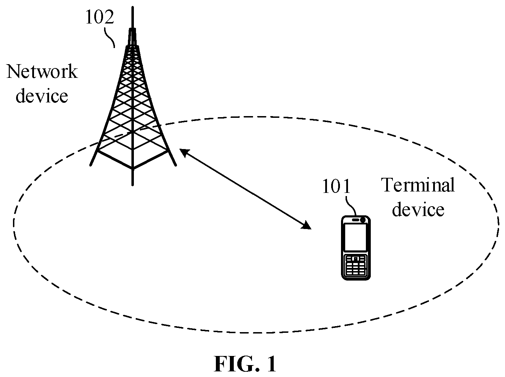

FIG. 1 illustrates a block diagram of a communication system according to an exemplary embodiment of the present disclosure. The communication system may include a terminal device 101 and a network device 102.

The terminal device 101 may include various handheld devices, vehicle-mounted devices, wearable devices or computing devices having a wireless communication function, or other processing devices connected to a wireless modem, as well as various forms of user equipment, Mobile Stations (MS), terminal devices, and the like. For convenience of description, the devices mentioned above are collectively referred to as the terminal device. The network device 102 and the terminal device 101 communicate with each other through some kind of air interface technology such as an Ultimate User (Uu) interface.

The network device 102 may be an evolved NodeB (eNB), an access point (AP) or a relay station in a Long Term Evolution (LTE) system, or a base station (such as a gNB or a Transmission Point (TRP)) in a 5G system. In a 5G New Radio in Unlicensed Spectrum (5G NR-U) system, a device having a function of base station is referred to as a gNodeB or a gNB. With the evolution of communication technology, the description of "base station" may change. The network device 102 may also be a wireless controller in a Cloud Radio Access Network (CRAN) scenario, a mobile switching center, a relay station, an access point, a vehicle-mounted device, a wearable device, a hub, a switch, a bridge, a router, or a network device in a future communication system. The network device 102 may also be a base station (such as a gNB or a Transmission Point (TRP) in a Non-terrestrial Network (NTN) system, a base station (Base Transceiver Station, BTS) in a Global System of Mobile Communication (GSM) system or a Code Division Multiple Access (CDMA) system, a base station (NodeB, NB) in a Wideband Code Division Multiple Access (WDMA) system, a core network or the like, which is not limited in the embodiment of the present disclosure.

In addition, in the embodiment of the present disclosure, the network device 102 provides services for a cell, and the terminal device 101 communicates with the network device 102 through transmission resources (e.g., frequency domain resources, or spectrum resources) used by the cell which may be a cell corresponding to the network device 102 (e.g., base station). The cell may belong to a macro base station, or a base station corresponding to a small cell. The small cell may include a Metro cell, a Micro cell, a Pico cell, a Femto cell, etc. These small cells have the characteristics of small coverage and low transmission power, and are suitable for providing high-speed data transmission services. In addition, the cell may also be a Hyper cell.

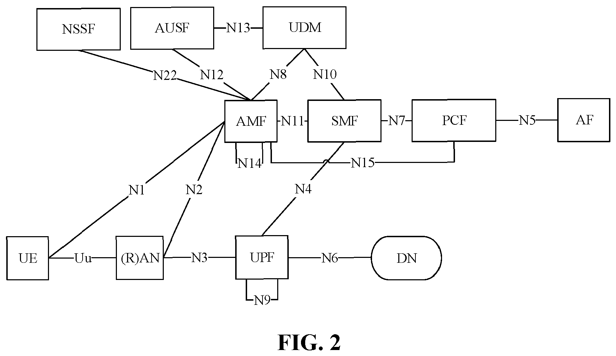

FIG. 2 illustrates a non-roaming 5G architecture based on a reference point presentation mode. As illustrated in FIG. 2, the 5G architecture includes Use Equipment (UE), a Radio Access Network (RAN), an Access and Mobility Management Function (AMF), a Session Management Function (SMF), a User Plane Function (UPF), an External Data Network (DN), a Policy Control Function (PCF), an Application Function (AF), and an Authentication service Function (AUSF), a Unified Data Management (UDM) Function and a Network Slice Selection Function (NSSF). That is, the 5G technology supports that different service requirements use different network slices. After the terminal device obtains the required network slice, the terminal device can request the required network slice from the network. After the network agrees to the network slice requested by the terminal device, the terminal device establishes a Protocol Data Unit (PDU) Session in the network slice for data transmission.

The network slice is usually identified by Single-Network Slice Selection Assistance Information (S-NSSAI). The combination of S-NSSAIs is NSSAI. The S-NSSAI includes a slice/service type (SST) and slice differentiation (SD). The SST represents a type of a scenario to which the network slice is applied, and the SD represents the detailed differentiation of different network slices under the application scenario corresponding to the SST. For example, when the SST is the V2X, the SD can be used to distinguish different car companies.

In the related art, the UE can transmit a registration request to the network when there is service requirement, and carry a requested S-NSSAI in the registration request. After receiving the registration request, the network will determine allowed network slices (Allowed NSSAIs) according to subscribed network slices (Subscribed NSSAIs) of the terminal device and a Public Land Mobile Network (PLMN). All slices in the allowed network slices can cover a tracking area allocated by the network to the UE. After the network determines the allowed network slices, the allowed network slices can be carried in a Registration Accept message and fed back to the UE, so that after receiving the allowed network slices, the UE can establish a PDU session in the allowed network slices, and then perform data transmission with the network.

It should be noted that the terminal device can initiate random access in a current camping cell (i.e., the cell on which the terminal device is currently camping), or select a target cell from neighboring cells of the current camping cell and initiate random access to the target cell. It is apparent that no matter the terminal device performs the random access in the current camping cell or in the target cell, the network slice requirements of the terminal device are not considered. However, network slices supported by different cells may be different, or the same network slice supported by different cells has different priorities. In such a case, a cell randomly accessed by the terminal device may not support the network slice required by the terminal device, or a priority of supporting the required network slice by the cell which is randomly accessed by the terminal device is not high enough, which results in poor support effect of the network on performance of the network slice required by the terminal device, such as a large network delay, high switching signaling overhead or high redirection signaling overhead, etc.

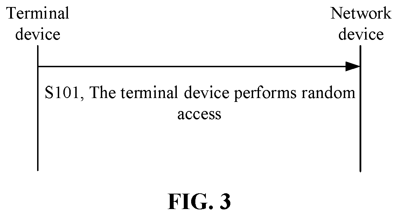

An embodiment of the present disclosure provides a random access method, as illustrated in FIG. 3, which includes the following operation.

At S101, the terminal device performs random access based on required first network slice information.

In an embodiment of the present disclosure, an access stratum (AS) of the terminal device can obtain the required first network slice information, and then perform random access according to the first network slice information. The network slice information is used for identifying a network slice. In some embodiments, the network slice information may be S-NSSAI, a network slice index, a network slice group identifier, an access type of the network slice, etc.

In some embodiments of the present disclosure, the AS of the terminal device may obtain the first network slice information from a non-access stratum (NAS) of the terminal device.

In an embodiment of the present disclosure, in response to determining the required service of the terminal device, the NAS may determine the first network slice information based on the required service. Alternatively, the NAS obtains the first network slice information in response to triggering random access, e.g., the beam failure recovery, transition from an inactive state to a connected state, and the like. It is also possible for the NAS to obtain the first network slice information when cell reselection needs to be performed, for example, channel quality of a current camping cell being lower than a preset quality threshold, etc. The timing for the NAS to obtain the first network slice information is not limited in the embodiment of the present disclosure.

The first network slice information may include a plurality of pieces of network slice information or may include one piece of network slice information, which is not limited in the embodiment of the present disclosure.

In an embodiment of the present disclosure, the AS may select the first network slice information required by the terminal device from a network slice information list. The network slice information list may come from the NAS layer of the terminal device.

In some embodiments of the present disclosure, the NAS may transmit the required service or a priority of a slice to the AS after determining the required service or the priority of the slice of the terminal device, so that the AS may select network slice information corresponding to the required service or network slice information corresponding to a high priority from the network slice information list as the first network slice information.

It should be noted that the network slice information list may include at least one of: allowed network slice information, subscribed network slice information, configured network slice information (Configured NSSAI), or requested network slice information (Request NSSAI). The configured network slice information or the allowed network slice information may be network slice information indicated by the network to the terminal device, i.e., network slice information available to the UE. Same network slice information may exist in the allowed network slice information, the subscribed network slice information, the configured network slice information (Configured NSSAI), and the requested network slice information (Request NSSAI).

In an embodiment of the present disclosure, the AS can determine an access cell based on the first network slice information, determine an access resource based on the first network slice information and the access cell, and initiate random access to the access cell through the access resource of the access cell.

In an embodiment of the present disclosure, the AS can take the current camping cell as the access cell, and can also select the access cell from the neighboring cells of the current camping cell, which is not limited in the embodiment of the present disclosure.

It should be noted that the terminal device in an idle state or an inactive state can receive system information of a cell. The system information carries network slice information supported by the cell. That is, based on the system information, the terminal device can determine the network slice information supported by the current camping cell and the network slice information supported by the neighboring cell, thereby determining whether the current camping cell and the neighboring cell support the first network slice information. Alternatively, the terminal device can determine network slice information supported by a frequency corresponding to the current camping cell and network slice information supported by a frequency corresponding to the neighboring cell, thereby determining whether each of different frequencies supports the first network slice information.

In some embodiments of the present disclosure, the system information also carries the priority of the network slice information for each frequency or cell, so that based on the system information, the terminal device can also determine the priority of supporting the first network slice information by the current camping cell and neighboring cell, or different frequencies.

In an embodiment of the present disclosure, in response to determining that the access cell supports the first network slice information, the terminal device can use a first access resource of the access cell to initiate random access to the access cell; and in response to determining that the access cell does not support the first network slice information, the terminal device can use a second access resource of the access cell to initiate random access to the access cell. The first access resource is a network slice resource corresponding to the first network slice information. The second access resource is a resource that does not have a correspondence with the first network slice information.

In some embodiments of the present disclosure, for a cell supporting network slice information, an access resource of the cell may include a network slice resource corresponding to the network slice information. In some embodiments, the access resource of the cell may further include a reserved access (default slice Random Access Channel (RACH)) resource that does not have a correspondence with the network slice information.

In some embodiments of the present disclosure, for a cell that does not support network slice information, an access resource of the cell may include a legacy resource, and there is no correspondence between the legacy resource and the network slice information. The legacy resource may be a common RACH resource. In some embodiments, an access resource of the cell may include a default slice RACH resource that does not have a correspondence with the network slice information.

Exemplarily, a network slice resource 1 corresponds to network slice information 1, a network slice resource 2 corresponds to network slice information 2, and a network slice resource 3 corresponds to network slice information 3. The access resource of the access cell includes the network slice resource 2, the network slice resource 3 and the reserved access resource. When the first network slice information is the network slice information 2, the AS can initiate random access to the access cell by using the network slice resource 2. When the first network slice information is the network slice information 1, the terminal device can initiate random access to the access cell by using the reserved access resource.

In some embodiments of the present disclosure, before the terminal device performs random access, the terminal device may first determine whether the first access resource or the second access resource is used as the access resource, and then determine whether legacy random access or 4-step random access is used. Alternatively, the terminal device can first determine whether legacy random access or two-step random access is used, and then determine whether the first access resource or the second access resource is used as the access resource. It should be noted that the terminal device may first determine whether an uplink (UL) resource or a supplementary uplink (SUL) resource is selected before determining the access resource to be used, or before determining whether the legacy random access or the two-step RACH is used.

In some embodiments of the present disclosure, the terminal device may determine the access cell based on whether the current camping cell supports the first network slice information. For example, in response to determining that the current camping cell supports the first network slice information, the current camping cell is determined as the access cell. In response to determining that the current camping cell does not support the first network slice information, the access cell is determined from neighboring cells. For example, in response to determining that the current camping cell supports the first network slice information and channel quality of the current camping cell satisfies a threshold, the current camping cell is determined as the access cell. In response to determining that the current camping cell does not support the first network slice information and/or channel quality of the current camping cell does not satisfy a threshold, the access cell is determined from neighboring cells.

In some embodiments of the present disclosure, the terminal device may determine the access cell based on whether the neighboring cell supports the first network slice information. For example, in response to determining that the neighboring cell supports the first network slice information, the neighboring cell is determined as the access cell. In response to determining that the neighboring cell does not support the first network slice information, the current camping cell is determined as the access cell. For example, in response to determining that the neighboring cell supports the first network slice information and channel quality of the neighboring cell satisfies a threshold, the current camping cell is determined as the access cell. In response to determining that the neighboring cell does not support the first network slice information and/or channel quality of the neighboring cell does not satisfy a threshold, the current camping cell is determined as the access cell.

In some embodiments of the present disclosure, the terminal device may first perform cell reselection to obtain a reselection result; determine an access cell according to the reselection result; and initiate random access to the access cell based on the first network slice information.

It should be noted that the cell reselection can be first cell reselection or second cell reselection. The first cell reselection does not consider the first network slice information. For example, the first cell reselection may be selecting, from the current camping cell and the neighboring cells of the current camping cell, a cell of which channel quality is higher than a channel quality threshold. The second cell reselection considers the first network slice information. For example, the second cell reselection may be selecting, from the current camping cell and the neighboring cells of the current camping cell, a cell supporting the first network slice information.

It should be noted that the reselection result includes that the cell reselection is successful or the cell reselection fails. The cell reselection is successful indicates that the terminal device selects the target cell from the current camping cell and the neighboring cells. When the cell reselection is successful, the terminal device can determine the target cell as the access cell. When the reselection result is that the cell reselection fails, the terminal device can determine the current camping cell as the access cell.

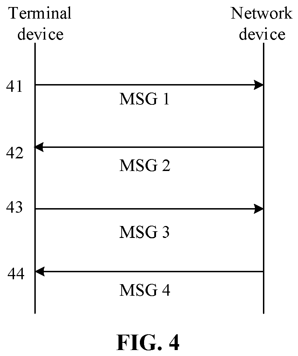

In some embodiments of the present disclosure, the random access may be contention-based random access. Referring to FIG. 4, the contention-based random access includes four operations 41 to 44.

At 41, the terminal device transmits a message 1 (MSG1) to the network device, where the MSG1 carries a preamble. The preamble is a preamble for contention transmitted by the terminal device on a contention-based time-frequency resource. The preamble is used for the network device to estimate uplink timing.

At 42, in response to the preamble, the network device transmits an MSG2, i.e., a Random Access Response (RAR), to the network. The random access response includes a control subheader which contains a Back-off time (Back-off Indicator (BI)) of the MSG1. It should be noted that after completing the operation 41, the terminal device will start an RAR window, and monitor, within the RAR window, a downlink control channel (PDCCH) which is scrambled by a Random Access Radio Network Temporary Identifier (RA-RNTI). The RA-RNTI is determined by the network device according to a time-frequency resource position at which the preamble is received. The RAR includes a preamble index, a Time Alignment Group (TAG) for adjusting uplink timing, an uplink (UL) grant and a temporary Cell-Radio Network Temporary Identifier (C-RNTI). The uplink grant indicates an uplink resource for transmitting an MSG3 in the operation 44. The temporary C-RNTI is used to scramble the downlink control channel of an MSG4 transmitted in the operation 44.

At 43, the terminal device transmits the MSG3 to the network device. The MSG3 is used to request to establish a Radio Resource Control (RRC) connection. The MSG3 usually carries an event that triggers the random access, that is, an establishment cause. Further, for initial access and RRC reestablishment, terminal device identifiers (UE IDs) carried in the MSG3 are different. The terminal device identifier (UE ID) may be carried in the MSG3 for the initial access, and an identifier of the terminal in a connected state (a Common Control Channel of Service Data Unit (CCCH SDU)) may be carried in the MSG3 for the RRC reestablishment.

At 44, in response to the MSG3, the network device feeds back the MSG4 to the terminal device. The MSG4 is used to resolve contention conflicts.

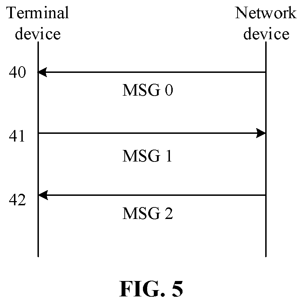

In some embodiments of the present disclosure, the random access may be non-contention based random access. Referring to FIG. 5, the non-contention based random access includes three operations 40 to 42. At 40, the network device transmits an MSG0 to the terminal device. The MSG0 carries a preamble assigned by the network device to the terminal device. At 41, in response to the MSG0, the terminal device transmits an MSG1 to the network device. The MSG1 carries the preamble sent by the network device to the terminal device. At 42, in response to the MSG1, the network device transmits to the terminal device an MSG2, i.e., a random access response. Compared with the contention based random access, the non-contention based random access has fewer operations and saves time.

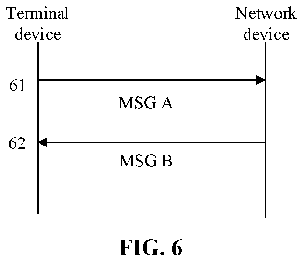

In some embodiments of the present disclosure, the random access may also be the two-step random access. Referring to FIG. 6, the two-step random access includes operations 61 and 62. At 61, the terminal device transmits a message A (MSGA) to the network device. Information carried in the MSGA includes information carried in the MSG1 and information carried in the MSG3, such as the preamble, the terminal device identifier (UE ID) and the establishment cause. At 62, in response to the MSGA, the network device transmits an MSGB to the terminal device. The MSGB is equivalent to the MSG2 and the MSG4, namely the RAR and the contention conflict resolution. The two-step random access can reduce the delay and reduce the signaling overhead.

In an embodiment of the present disclosure, the random access mode can be set as required, which is not limited in the embodiment of the present disclosure.

It should be noted that access resource can include a preamble and an RACH occasion. In some embodiments, the access resource may further include a priority parameter of the random access. The priority parameter of the random access is used to characterize a priority of the terminal device in using the random access resource. For example, the priority parameter of random access may be characterized by at least one of a power ramping factor (power rampingStepHighPriority) or a back-off scaling factor (scaling factorBI).

It can be understood that after obtaining the required first network slice information, the terminal device can perform random access by using the appropriate access resource based on the first network slice information, which improves the flexibility of the random access and the support effect of the network on the first network slice information.

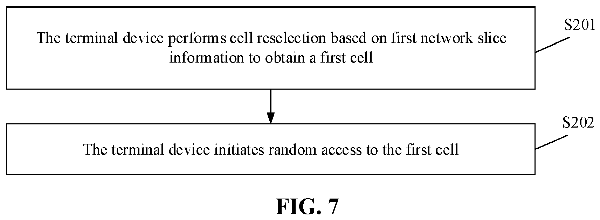

In some embodiments of the present disclosure, the implementation of the operation S101 in which the terminal device performs the random access based on the requested network slice information may include operations S201 to S202, as illustrated in FIG. 7.

At S201, the terminal device performs cell reselection based on the first network slice information to obtain a first cell. The first cell is a current camping cell supporting the first network slice information or a neighboring cell supporting the first network slice information.

In an embodiment of the present disclosure, the terminal device can perform cell reselection based on the first network slice information, and obtain the first cell from the current camping cell or the neighboring cells. The first cell is a cell supporting the first network slice information.

In some embodiments of the present disclosure, the first cell may be a cell supporting the first network slice information and satisfying a first preset condition. The first preset condition may include at least one of: the first cell satisfying the S criterion; channel quality of the first cell being higher than a channel quality threshold; a duration within which the channel quality of the first cell is higher than the channel quality threshold being greater than or equal to a first duration; a priority of supporting the first network slice information by the first cell being the highest; or a frequency priority of the first cell being the highest.

In embodiments of the present disclosure, satisfying the S criterion includes receiving power (Srxlev) of the first cell being greater than 0 and signal quality (Squal) of the first cell being greater than 0.

In an embodiment of the present disclosure, the first duration and the channel quality threshold may be set as required, which is not limited in the embodiment of the present disclosure.

It should be noted that the method for the terminal device to select a cell with the highest priority of supporting the first network slice information and the highest frequency priority may include following operations. The terminal device firstly sorts cells according to their respective priorities of supporting the first network slice information to obtain a first preset number of cells with higher priorities of supporting the first network slice information, and then selects a cell with the highest frequency priority from the first preset number of cells as the first cell. Alternatively, the terminal firstly sorts cells according to their respective frequency priorities to obtain a second preset number of cells with higher frequency priorities, and then selects a cell with the highest priority of supporting the first network slice information from the second preset number of cells as the first cell.

Exemplarily, the first cell may be a cell from the current camping cell and the neighboring cells and the first cell supports the first network slice information, satisfies the S criterion, has a channel quality higher than the channel quality threshold, and has the highest priority of supporting the first network slice information. Exemplarily, the terminal may select first candidate cells supporting the first network slice information from the current camping cell and the neighboring cells. Then, the terminal selects second candidate cells satisfying the S criterion from the first candidate cells. Then, the terminal selects a cell with the highest priority of supporting the first network slice information from the second candidate cells as the first cell.

Exemplarily, when a priority of supporting the first network slice information by the neighboring cell is higher than a priority of supporting the first network slice information by the current camping cell, the UE selects the neighboring cell as the first cell.

In some embodiments of the present disclosure, when the current camping cell does not support the first network slice information, the terminal device can perform cell reselection based on the neighboring cells, and the obtained first cell is a cell supporting the first network slice information in the neighboring cells. In some embodiments, the first cell may be a neighboring cell supporting the first network slice information and satisfying a first preset condition. Alternatively, the first cell can also be a neighboring cell supporting the first network slice information, satisfying the first preset condition, and having a frequency priority lower than that of the current camping cell. Alternatively, the first cell can also be a neighboring cell supporting the first network slice information, satisfying the first preset condition, and having a frequency priority higher than that of the current camping cell.

At S202, the terminal device initiates random access to the first cell.

In an embodiment of the present disclosure, after determining the first cell, the terminal device can determine the first cell as an access cell, and initiate random access to the first cell.

In some embodiments of the present disclosure, the terminal device may initiate random access to the first cell through an access resource corresponding to the first network slice information of the first cell.

In some embodiments of the present disclosure, the terminal device may also initiate random access to the first cell through the second access resource.

In some embodiments, the second access resource may be a legacy resource or a reserved slice resource.

It can be understood that the terminal device can perform cell reselection based on the first network slice information, select a cell supporting the first network slice information from the neighboring cells as the first cell, and initiate random access to the first cell.

In some embodiments of the present disclosure, the terminal device performs cell reselection based on the first network slice information, and when the cell reselection fails, the terminal device may initiate random access to the current camping cell.

In an embodiment of the present disclosure, a cell reselection failure indicates that the terminal device has not obtained the first cell from the current camping cell or the neighboring cells. The cell reselection failure includes at least one of the following cases: neither the current camping cell nor the neighboring cell supporting the first network slice information; or the current camping cell and the neighboring cell supporting the first network slice information but not satisfying the first preset condition.

In an embodiment of the present disclosure, the terminal device performs cell reselection based on the first network slice information, and when the cell reselection fails, the terminal device can initiate random access to the current camping cell through the second access resource.

In an embodiment of the present disclosure, the second access resource may be a legacy resource or a default slice RACH resource.

In some embodiments of the present disclosure, the terminal device performs cell reselection based on the first network slice information, and when the cell reselection fails, the terminal device can obtain a second cell according to a legacy cell reselection criterion and initiate random access to the second cell.

In an embodiment of the present disclosure, the terminal device performs cell reselection based on the first network slice information, and when the cell reselection fails and the terminal device does not reselect the first cell from the neighboring cells, the terminal device can perform legacy cell reselection to obtain the second cell. The second cell includes at least one of: the current camping cell satisfying an R criterion or the neighboring cell satisfying an R criterion; the current camping cell with the highest frequency priority or the neighboring cell with the highest frequency priority; or the current camping cell satisfying an S criterion or the neighboring cell satisfying an S criterion.

In an embodiment of the present disclosure, the terminal device can calculate R values of the current camping cell and the neighboring cells, and determine a cell satisfying a second preset condition as a cell satisfying the R criterion. The second preset condition includes at least one of: a cell with the highest R value; or a cell of which an R value is greater than an R value threshold.

In some embodiments, the R value threshold may be a preset threshold or the R value of the current camping cell, which is not limited in the embodiments of the present disclosure.

The cell of which the R value is greater than the R value threshold may include: a cell of which the R value is greater than the R value threshold and satisfying the second preset condition. The second preset condition may include at least one of: a duration in which the R value of the cell is greater than the R value threshold being greater than or equal to a second duration; the cell supporting the largest number of beams; the cell supporting the network slice; or frequency priority of the cell being the highest.

Exemplarily, the R value threshold is the R value of the current camping cell, and the terminal device can sort cells of which received powers are greater than 0 according to their respective R values, and determine a cell with the highest frequency priority, from neighboring cells of which R values are higher than the R value of the current camping cell in a duration greater than or equal to the second duration, as the second cell.

In some embodiments of the present disclosure, the terminal device can sort cells of which received powers are greater than 0 according to their respective R values, and select a cell with the highest frequency priority, from neighboring cells of which R values are higher than the R value of the current camping cell within a certain duration during the cell reselection time, as the second cell.

In other embodiments of the present disclosure, the terminal device may sort cells of which received powers are greater than 0 in a descending order of R value, and select a cell with the highest frequency priority, from the specific number of cells (i.e., one or more cells) with the highest R value, as the second cell.

In an embodiment of the present disclosure, the legacy cell reselection criterion does not consider the first network slice information. That is, the second cell re-selected by the terminal device according to the legacy cell reselection criterion may or may not support the first network slice information.

In some embodiments of the present disclosure, when the second cell supports the first network slice information, random access may be initiated to the second cell through an access resource corresponding to the first network slice information in the second cell.

In some embodiments of the present disclosure, when the second cell does not support the first network slice information, random access may be initiated to the second cell through a second access resource of the second cell. The second access resource may be a legacy resource of the second cell or a default slice RACH resource of the second cell.

It can be understood that after the cell reselection based on the first network slice information fails, the terminal device can also perform legacy cell reselection through the legacy cell reselection criterion to obtain the second cell, and initiate random access to the second cell.

In some embodiments of the present disclosure, the terminal device can perform cell reselection based on the first network slice information in at least one of following cases: the current camping cell not supporting the first network slice information; the neighboring cell supporting the first network slice information; a priority of supporting the first network slice information by the neighboring cell being higher than a priority of supporting the first network slice information by the current camping cell; a service corresponding to the first network slice information being Mobile Original (MO) service or MO data service; the first network slice information being not allowed network slice information; the first network slice information being obtained; the first network slice information being obtained before performing the random access, or before transmitting an MSG1, or before transmitting an MSGA, or before transmitting the MSG3; reselection indication information being received, where the reselection indication information is used to instruct the terminal device to perform the cell reselection; or the cell reselection being supported by the terminal device.

In an embodiment of the present disclosure, the terminal device can perform cell reselection based on the first network slice information under any one or combination of any plurality of cases, and select a cell for random access according to a result of the cell reselection.

In some embodiments of the present disclosure, when the current camping cell does not support the first network slice information, the first cell may exist in the neighboring cells, so that the terminal device may obtain the first cell through cell reselection.

In some embodiments of the present disclosure, when the neighboring cells support the first network slice information, the terminal device may obtain a cell supporting the first network slice information from the neighboring cells.

In some embodiments of the present disclosure, when the neighboring cells support the first network slice information and the current camping cell does not support the first network slice information, the terminal device performs cell reselection based on the first network slice information.

In some embodiments of the present disclosure, when the priorities of supporting the first network slice information by the neighboring cells are higher than the priority of supporting the first network slice information by the current camping cell, the terminal device can obtain a cell with higher priority of supporting the first network slice information from the neighboring cells through cell reselection for random access.

In some embodiments of the present disclosure, when the service corresponding to the first network slice information is Mobile Terminal (MT) service, the terminal device can perform cell reselection based on the first network slice information. Alternatively, when the service corresponding to the first network slice information is the MO service, the terminal device can perform cell reselection based on the first network slice information. It should be noted that the MT service or the MO service can also be replaced by establishing or modifying the PDU session.

In some embodiments of the present disclosure, when the service corresponding to the first network slice information is the MO data service in the MO service, the terminal device can perform cell reselection based on the first network slice information.

In some embodiments of the present disclosure, the service corresponding to the first network slice information is the MO service, and the terminal device can perform cell reselection based on the first network slice information in at least one of following cases: the current camping cell not supporting the MO service or the neighboring cell supporting the MO service.

In some embodiments of the present disclosure, the service corresponding to the first network slice information is the MO data service, and the terminal can perform cell reselection based on the first network slice information in at least one of following cases: the current camping cell not supporting the MO service; the current camping cell not supporting the MO data service; the neighboring cell supporting the MO service; or the neighboring cell supporting the MO data service.

In an embodiment of the present disclosure, the first network slice information being not allowed network slice information indicates that the first network slice information does not belong to an allowed NSSAI, so that the terminal device can perform cell reselection based on the first network slice information.

In some embodiments of the present disclosure, as long as the terminal device obtains the first network slice information, the terminal device can perform cell reselection based on the first network slice information.

In some embodiments of the present disclosure, when the first network slice information is obtained after obtaining the second network slice information required by the terminal device, the terminal device can perform cell reselection based on the first network slice information. That is, when the first network slice information is obtained after the second network slice information has been obtained, the terminal device can perform cell reselection based on the first network slice information.

In some embodiments of the present disclosure, the terminal device obtains the first network slice information after obtaining the second network slice information, and when the second network slice information and the first network slice information are obtained by the terminal device in the same Tracking Area (TA) or at a TA boundary, the terminal device can perform cell reselection based on the first network slice information.

It should be noted that after receiving the required network slice information for the first time in a current TA, the terminal device can obtain an allowed NSSAI corresponding to the current TA and save the allowed NSSAI. Thus, the terminal device also obtaining the first network slice information in the current TA indicates that the terminal device has obtained the allowed NSSAI corresponding to the current TA before obtaining the first network slice information, and the terminal device can perform cell reselection based on the first network slice information.

In some embodiments of the present disclosure, the AS receiving the first network slice information from the NAS is equivalent to the AS receiving a cell reselection indication. In response to the cell reselection indication, the terminal device can perform cell reselection based on the first network slice information.

In some embodiments of the present disclosure, after the AS selects the first network slice information from a network slice list, the AS can perform cell reselection based on the first network slice information, and perform random access according to a result of the cell reselection.

In some embodiments of the present disclosure, the first network slice information includes one piece of network slice information. Exemplarily, after obtaining the first network slice information, the terminal device can determine the number of network slice information included in the first network slice information, and perform cell reselection based on the first network slice information in response to determining that the first network slice information only includes one piece of network slice information.

In some embodiments of the present disclosure, after obtaining the first network slice information, the terminal device can determine whether to perform cell reselection according to the timing of obtaining the first network slice information.

In an embodiment of the present disclosure, the terminal device can perform cell reselection when the first network slice information is obtained and the time of obtaining the first network slice information is before performing random access. Alternatively, the terminal device can perform cell reselection when the first network slice information is obtained and the time of obtaining the first network slice information is before transmitting a preamble to the network for random access. Thus, the terminal device can perform cell reselection before accessing the cell through random access, and when another cell other than the the cell is obtained by reselection, the terminal device initiates access to the another cell.

In an embodiment of the present disclosure, the preamble for random access may be carried in the MSG1 or in the MSGA, which is not limited in the embodiment of the present disclosure.

In some embodiments of the present disclosure, the AS of the terminal device can perform cell reselection after receiving the reselection indication information from the NAS. The reselection indication information is used to instruct the terminal device to perform cell reselection based on the first network slice information.

It should be noted that the terminal device can perform cell reselection and random access every time the terminal device receives the reselection indication information. Alternatively, after receiving the reselection indication information, the terminal device can perform cell reselection when random access is needed. In this regard, the embodiments of the present disclosure are not limited.

It should be noted that the reselection indication information may come from the terminal device, such as the NAS of the terminal device, or from at least one of network devices, such as a base station, the AMF or the UPF, etc.

In some embodiments of the present disclosure, the reselection indication information may include at least one of: the first network slice information; protocol data unit session establishment request information; service establishment request information; service request information; service request information; or random access indication information.

In some embodiments of the present disclosure, the reselection indication information includes first network slice information. That is, after receiving the first network slice information from the NAS of the terminal device, the AS of the terminal device can perform cell reselection based on the first network slice information.

In some embodiments of the present disclosure, the reselection indication information includes the protocol data unit (PDU) session establishment request information. After receiving the PDU session establishment request from the NAS, the AS of the terminal device can perform cell reselection based on the first network slice information.

In some embodiments of the present disclosure, the reselection indication information includes the service establishment request information. After receiving the service establishment request information from the NAS, the AS of the terminal device can perform cell reselection based on the first network slice information.

In some embodiments of the present disclosure, the service establishment request includes an MO service establishment request or an MT service establishment request.

In some implementations of the present disclosure, the MO service may be MO data service.

In an embodiment of the present disclosure, when the terminal device receives the MO data service establishment request, the terminal device needs to establish a PDU session in the network slice. Thus, the terminal device receiving the MO data service establishment request is equivalent to the terminal device receiving the PDU session establishment request.

In some embodiments of the present disclosure, the reselection indication information includes the service establishment request information. The AS of the terminal device can also perform cell reselection based on the first network slice information after receiving the service request information from the NAS. The service request information indicates the service arriving at the terminal device.

Exemplarily, when the MO service arrives, the NAS transmits the service request information to the AS, where the service request information carries the MO service identifier. After receiving the service request information, the AS can select the network slice information corresponding to the MO service as the first network slice information from the network slice information list. When the current camping cell does not support the first network slice information and the neighboring cell supports the first network slice information, the cell reselection is performed based on the first network slice information.

Exemplarily, when the MO service arrives, the NAS can determine the network slice information corresponding to the MO service as the first network slice information and transmit the reselection indication information to the AS. The reselection indication information includes the first network slice information and the service request information. After receiving the reselection indication information, the AS can obtain the first network slice information from the reselection indication information and perform cell reselection based on the first network slice information.

In some embodiments of the present disclosure, the reselection indication information includes the service request (SR) information. After receiving the SR from the NAS, the AS of the terminal device can perform cell reselection based on the first network slice information.

In some embodiments of the present disclosure, the reselection indication information includes a random access indication. The NAS of the terminal device can transmit random access indication information to the AS in response to determining that the random access needs to be triggered, and instruct, through the random access indication information, the AS to perform random access. After receiving the random access indication information, the AS can perform cell reselection based on the first network slice information, and determine an access cell according to a result of the cell reselection.

In some embodiments of the present disclosure, the terminal device may have the cell reselection function, i.e., a function of performing the cell reselection based on the first network slice information. Alternatively, the terminal device may not have the cell reselection function. Therefore, when the terminal supports the cell reselection, the terminal can perform the cell reselection based on the first network slice information.

In an embodiment of the present disclosure, whether the terminal device supports the cell reselection function can be set in advance, so that the terminal device can determine whether the terminal device supports the cell reselection. Alternatively, the terminal device can determine that it can support the cell reselection function after receiving cell function indication information from the network device. In this regard, the embodiments of the present disclosure are not limited.

It can be understood that the terminal device can perform cell reselection based on the first network slice information only when the cell reselection is needed, and determine an access cell according to a result of the cell reselection. In such a manner, resources consumed by the terminal device for performing the cell reselection are reduced, flexibility of cell reselection is improved, and thus the efficiency of random access is improved.

In some embodiments of the present disclosure, when the current camping cell does not support network slice information, the terminal device may initiate random access to the current camping cell based on the second access resource of the current camping cell. The second access resource can be a legacy access resource or a reserved access resource.

In an embodiment of the present disclosure, after obtaining the first network slice information, the terminal device can determine whether the current camping cell supports the first network slice information, and in response to determining that the current camping cell does not support the first network slice information, the terminal device initiates random access to the current camping cell by using the legacy access resource or the reserved resource of the current camping cell. In response to determining that the current camping cell supports the first network slice information, random access is initiated to the current camping cell through the network slice resource corresponding to the first network slice information supported by the current camping cell.

It can be understood that the terminal device can determine, according to whether the current camping cell supports the first network slice information, an access resource used for performing random access to the current camping cell, so that the terminal device can access to the current camping cell by using the appropriate access resource, thus improving the support effect of the current camping cell on the network slice required by the terminal device.

In some embodiments of the present disclosure, when the current camping cell does not support the first network slice information, the terminal device may report slice requirement information to the network device. The slice requirement information includes unsupported indication information. The unsupported indication information indicates that the current camping cell does not support the first network slice information.

In some embodiments of the present disclosure, when the current camping cell does not support the first network slice information, the terminal device may report slice requirement information to the network device. The slice requirement information includes the first network slice information.

It should be noted that the terminal device can report the slice requirement information in the MSG3 or MSGA payload of the random access. Thus, the terminal device needs to obtain the first network slice information before transmitting the MSG3 or MSGA payload. Alternatively, the terminal device may obtain the first network slice information before transmitting the MSG1 or the MSGA.

In an embodiment of the present disclosure, when the current camping cell does not support the first network slice information, the terminal device can report the slice requirement information to the network device. Thus, in response to the slice requirement information, the network device performs next processing. For example, the network device can instruct the terminal device to switch or redirect; or, the network device can instruct the terminal device to perform cell reselection, determine an access cell according to a result of the cell reselection, and initiate random access to the access cell.

In some embodiments of the present disclosure, the slice requirement information includes the unsupported indication information and the first network slice information.

In some embodiments of the present disclosure, when the current camping cell does not support the first network slice information, the terminal device may initiate random access to the current camping cell based on the second access resource of the current camping cell and report the slice requirement information to the network device.

In some embodiments of the present disclosure, the terminal device may first obtain the first network slice information, and then perform random access based on the first network slice information.

In an embodiment of the present disclosure, the terminal device needs to obtain the first network slice information before performing the random access. Thus, the terminal device can perform random access by using the appropriate access resource based on the first network slice information.

In some embodiments of the present disclosure, the terminal device may obtain the first network slice information before triggering the random access, and perform the random access based on the first network slice information.

In some embodiments of the present disclosure, the terminal device may first obtain the first network slice information, after obtaining the first network slice information, the terminal device triggers random access, and the terminal device can perform random access based on the first network slice information.

It should be noted that the event of triggering the random access by the terminal device is an event of triggering the random access in 5G, such as initial access, RRC connection re-establishment, cell handover, establishing time alignment at a secondary cell (Scell), etc., which can be set according to actual needs, is not limited in the embodiment of the present disclosure.

In some embodiments of the present disclosure, the random access performed by the terminal device is legacy random access based on the first network slice information, the terminal device needs to obtain the first network slice information before transmitting the MSG1 to the network device. Thus, based on the first network slice information, the terminal device can perform first network slice information based random access.

In some embodiments of the present disclosure, the random access performed by the terminal device is two-step random access based on the first network slice information, the terminal device needs to obtain the first network slice information before transmitting the MSGA to the network device. Thus, based on the first network slice information, the terminal device can perform first network slice information based two-step random access.

It should be noted that the access resource corresponding to the first network slice information includes a preamble, and the terminal device transmits the preamble in the MSG1 when the terminal device performs legacy random access. When the terminal device performs the two-step random access, the preamble is sent in the MSGA. Therefore, the terminal device needs to obtain the first network slice information before transmitting the MSG1 or the MSGA, so as to realize the random access based on the access resource corresponding to the first network slice information.

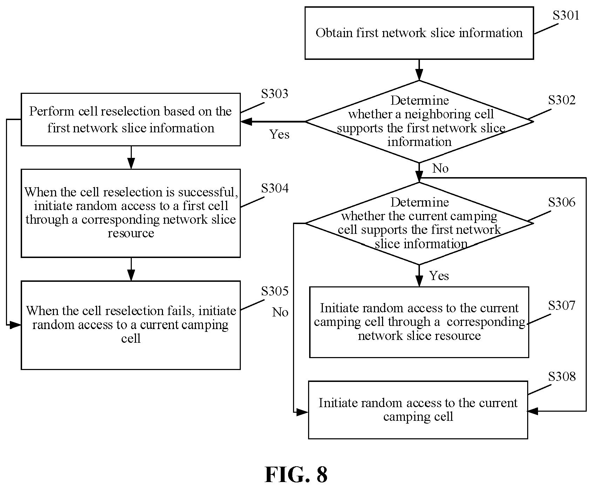

FIG. 8 illustrates a flowchart of a random access method. As illustrated in FIG. 8, the random access method may include following operations.

At S301, first network slice information is obtained.

At S302, whether a neighboring cell supports the first network slice information is determined. In response to determining that the neighboring cell supports the first network slice information, operations S303 to S305 are performed. Otherwise, an operation S308 is performed, or operations S306 to S308 are performed.

At S303, cell reselection is performed based on the first network slice information to obtain a reselection result. The reselection result characterizes whether a first cell supporting the first network slice information and satisfying an S criterion is obtained from a current camping cell or neighboring cells.

In an embodiment of the present disclosure, the terminal device can determine whether cells supporting the first network slice information and satisfying the S criterion exist in the current camping cell or the neighboring cells. In response to determining that the cells supporting the first network slice information and satisfying the S criterion exist in the current camping cell or the neighboring cell, one of the cells supporting the first network slice information and satisfying the S criterion can be selected as the first cell, and the reselection result may be determined as that the cell reselection is successful. In response to determining that no cell supporting the first network slice information and satisfying the S criterion exists in the current camping cell or the neighboring cell, the reselection result may be determined as a reselection failure.

At S304, when the reselection result is that the cell reselection is successful, random access is initiated to the first cell through a network slice resource corresponding to the first network slice information of the first cell.

At S305, when the reselection result is a cell reselection failure, random access is initiated to the current camping cell through a legacy resource or a reserved slice resource of the current camping cell.

At S306, whether the current camping cell supports the first network slice information is determined. In response to determining that the current camping cell supports the first network slice information, the operation S307 is performed. Otherwise, the operation S308 is performed.

At S307, the random access is initiated to the current camping cell through a network slice resource corresponding to the first network slice information of the current camping cell.

At S308, the random access is initiated to the current camping cell through the legacy resource or the reserved slice resource of the current camping cell.

In an embodiment of the present disclosure, after obtaining the first network slice information, the terminal device can first determine whether the neighboring cell supports the first network slice information. In response to determining that the neighboring cell supports the first network slice information, the terminal device performs cell reselection based on the first network slice information. When the reselection result is that the first cell supporting the first network slice information and satisfying the S criterion is selected from the current camping cell or the neighboring cells, that is, when the cell reselection is successful, the terminal device initiates random access to the first cell through the network slice resource corresponding to the first network slice information supported by the first cell. When the cell reselection fails, the terminal device initiates random access to the current camping cell through the legacy resource or the reserved slice resource of the current camping cell. In response to determining that the neighboring cell does not support the first network slice information, the terminal device selects the access resource according to whether the current camping cell supports the first network slice information, and the terminal device initiates random access to the current camping cell. Thus, random access is performed based on the first network slice information, thereby improving the support effect of network on the network slice required by the terminal device.

An embodiment of the present disclosure provides a random access method, which may include operations S401 to S404.

At S401, first network slice information is obtained.

At S402, whether a current camping cell supports the first network slice information is determined. In response to determining that the current camping cell supports the first network slice information, the operation S403 is performed; and in response to determining that the current camping cell does not support the first network slice information, the operation S404 is performed.

At S403, random access is initiated to the current camping cell through a network slice resource corresponding to the first network slice information of the current camping cell.

At S404, random access is initiated to the current camping cell through a legacy resource or a reserved slice resource of the current camping cell.

In an embodiment of the present disclosure, the terminal can determine, according to whether the current camping cell supports the first network slice information, which access resource is used to initiate random access to the current camping cell, which improves the support effect of the current camping cell on the network slices required by the terminal.

An embodiment of the present disclosure provides a random access method, which may include operations S501 to S504.

At S501, first network slice information is obtained.

At S502, whether a current camping cell supports the first network slice information is determined. In response to determining that the current camping cell supports the first network slice information, the operation S503 is performed. Otherwise, the operation S504 is performed.

At S503, random access is initiated to a first cell through a network slice resource corresponding to the first network slice information of the current camping cell.

At S504, cell reselection is performed based on the first network slice information to obtain a reselection result. The reselection result characterizes whether the first cell supporting the first network slice information and satisfying a channel quality condition such as an S criterion is obtained from the neighboring cells.

In an embodiment of the present disclosure, the cell reselection being successful indicates that the neighboring cell supports the first network slice information and satisfies the channel quality condition, such as the S criterion, and the reselected first cell is the neighboring cell.

At S505, when the reselection result is that the cell reselection is successful, random access is initiated to the first cell through a network slice resource corresponding to the first network slice information of the first cell.

At S506, when the reselection result is a cell reselection failure, random access is initiated to the current camping cell through a legacy resource or a reserved slice resource of the current camping cell.

In an embodiment of the present disclosure, when the current camping cell supports the first network slice information, the terminal can initiate random access to the current camping cell by preferentially using the network slice resource corresponding to the first network slice information of the current camping cell. When the current camping cell does not support the first network slice information, the terminal can reselect a cell from the neighboring cells. In response to the first cell being re-selected from the neighboring cells, the terminal can initiate random access to the first cell by using the network slice resource corresponding to the first network slice information of the first cell. In response to no first cell being reselected from the neighboring cells, the terminal can initiate random access to the current camping cell by using the legacy resource or the reserved slice resource of the current camping cell.

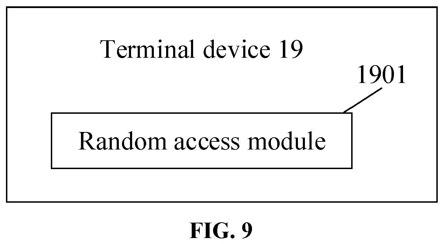

FIG. 9 is a schematic structural composition diagram of an optional terminal device according to an embodiment of the present disclosure. As illustrated in FIG. 9, the terminal device 19 includes a random access module 1901.

The random access module 1901 is configured to perform random access based on required first network slice information.

In some embodiments, the random access module 1901 is further configured to perform cell reselection based on the first network slice information to obtain a first cell, the first cell being a current camping cell supporting the first network slice information or a neighboring cell supporting the first network slice information; and initiate random access to the first cell.

In some embodiments, the random access module 1901 is further configured to initiate the random access to the first cell based on an access resource of the first cell corresponding to the first network slice information.

In some embodiments, the random access module 1901 is further configured to perform cell reselection based on the first network slice information; and when the cell reselection fails, initiate random access to a current camping cell.

In some embodiments, the random access module 1901 is further configured to perform cell reselection based on the first network slice information; and when the cell reselection fails, initiate random access to a current camping cell based on a legacy resource of the current camping cell or a reserved slice resource of the current camping cell.

In some embodiments, the random access module 1901 is further configured to perform cell reselection based on the first network slice information; when the cell reselection fails, obtain a second cell according to a legacy cell reselection criterion; and initiate random access to the second cell.

In some embodiments, the random access module 1901 is further configured to the first cell is one of: a current camping cell supporting the first network slice information and satisfying a first preset condition; or a neighboring cell supporting the first network slice information and satisfying a first preset condition. The first preset condition includes at least one of: the first cell satisfying an S criterion; channel quality of the first cell being higher than a channel quality threshold; a duration within which channel quality of the first cell is higher than the channel quality threshold being greater than or equal to a first duration; a priority of supporting the first network slice information by the first cell being the highest; or a frequency priority of the first cell being the highest.

In some embodiments, the random access module 1901 is further configured to perform the cell reselection based on the first network slice information in at least one of following cases: the current camping cell not supporting the first network slice information; the neighboring cell supporting the first network slice information; a priority of supporting the first network slice information by the neighboring cell being higher than a priority of supporting the first network slice information by the current camping cell; service corresponding to the first network slice information being Mobile Original (MO) service or MO data service; the first network slice information being not allowed network slice information; the first network slice information being obtained; the first network slice information being obtained before performing the random access, or before transmitting a message (MSG)1, or before transmitting an MSGA; reselection indication information being received and the reselection indication information being used to instruct the terminal device to perform the cell reselection; or the cell reselection being supported by the terminal device.

In some embodiments, the reselection indication information includes at least one of: the first network slice information; protocol data unit session establishment request information; service establishment request information; service request information; service request information; or random access indication information.

In some embodiments, the random access module 1901 is further configured to obtain the first network slice information after obtaining required second network slice information.

In some embodiments, the first network slice information includes one piece of network slice information.

In some embodiments, the service corresponding to the first network slice information being the MO service or the MO data service includes: the service corresponding to the first network slice information being the MO service, and the current camping cell supporting the MO service and the neighboring cell supporting the MO service; or the service corresponding to the first network slice information being the MO data service, and the current camping cell supporting the MO data service and the neighboring cell supporting the MO data service.

In some embodiments, the service is the MO service.

In some embodiments, the random access module 1901 is further configured to: in response to determining that the terminal device supports the cell reselection, perform the cell reselection based on the first network slice information.

In some embodiments, the random access module 1901 is further configured to: in response to determining that a current camping cell does not support the first network slice information, the terminal device initiate random access to the current camping cell based on a legacy resource of the current camping cell or a reserved slice resource of the current camping cell.

In some embodiments, the random access module 1901 is further configured to: in response to determining that a current camping cell does not support the first network slice information, transmit slice requirement information to a network device. The slice requirement information includes one of: information indicating that the current camping cell does not support the first network slice information; or the first network slice information.

In some embodiments, the random access module 1901 is further configured to obtain the first network slice information, and perform random access based on the first network slice information.

In some embodiments, the random access module 1901 is further configured to obtain the first network slice information before the terminal device transmits an MSG1 or an MSGA to a network device, or before the terminal device triggers a random access procedure.

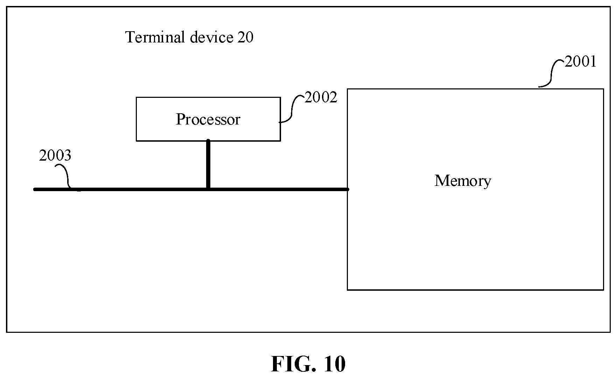

FIG. 10 is a schematic structural composition diagram of an optional terminal device according to an embodiment of the present disclosure. As illustrated in FIG. 10, the terminal device 20 includes a memory 2001, a processor 2002 and a computer program stored in the memory 2001 and executable by the processor 2002. The processor is configured to execute the computer program to perform the random access method in the above embodiments.

It will be understood that the terminal device 20 further includes a bus system 2003. Various components in the terminal device 20 are coupled together through the bus system 2003. It can be understood that the bus system 2003 is configured to realize connection communication between these components. The bus system 2003 includes a power bus, a control bus and a status signal bus in addition to a data bus.

It will be understood that the memory in the present embodiment may be a volatile memory or a non-volatile memory and may include both the volatile memory and the non-volatile memory. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Magnetic Random Access Memory (FRAM), a Flash Memory, a Magnetic Surface Memory (MSM), an Optical Disk, or a Compact Disc Read-Only Memory (CD-ROM). The MSM may be a magnetic disk memory or a magnetic tape memory. The volatile memory may be a Random Access Memory (RAM) which serves as an external cache. By way of illustration, but not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), and SyncLink Dynamic Random Access Memory (SLDRAM), Direct Rambus Random Access Memory (DRRAM). Memories described in embodiments of the present disclosure are intended to include but are not limited to these and any other suitable types of memory.

The methods disclosed in the above embodiments of the present disclosure may be applied to a processor or may be implemented by a processor. The processor may be an integrated circuit chip with signal processing capability. In the implementation process, the operations of the above method can be completed by integrated logic circuits of the hardware in the processor or instructions in the form of software. The processor may be a general purpose processor, a digital signal processor (DSP), or other programmable logic devices, a discrete gate or a transistor logic device, a discrete hardware component, etc. The processor may implement or execute the methods, operations, and logic block diagrams disclosed in embodiments of the present disclosure. The general purpose processor can be a microprocessor or any conventional processor. The operations of the method disclosed in combination with the embodiments of the present disclosure can be directly embodied as being completed and executed by a hardware decoding processor or completed and executed by the hardware and software modules in the decoding processor. The software module may be located in a storage medium which is located in a memory, and the processor reads information in the memory and completes the operations of the above method in combination with its hardware.

An embodiment of the present disclosure further provides a computer-readable storage medium having stored thereon a computer program. When the computer-readable storage medium is located in a terminal device and the computer program is executed by a processor, the operations in the random access method according to the embodiments of the present disclosure are performed.

### Industrial practicality

In the embodiments of the present disclosure, the terminal device performs random access based on the required first network slice information. In this way, based on the required first network slice information, the terminal device can perform the random access by using an appropriate random access resource, thereby improving the support effect of the network device on performance of the random access.

## Claims

1. A method for random access, comprising:
performing (S101), by a terminal device, random access based on required first network slice information, **characterized by** comprising:
performing (S201), by the terminal device, cell reselection based on the first network slice information to obtain a first cell in case that reselection indication information is received,
wherein the first cell is a current camping cell supporting the first network slice information or a neighboring cell supporting the first network slice information; and
wherein the reselection indication information is used to instruct the terminal device to perform the cell reselection, and comprises the first network slice information; and
initiating (S202), by the terminal device, random access to the first cell based on an access resource of the first cell corresponding to the first network slice information.

2. The method of claim 1, wherein performing, by the terminal device, the random access based on the required first network slice information further comprises:
in response to determining that the cell reselection fails, obtaining, by the terminal device, a second cell according to a legacy cell reselection criterion; and
initiating, by the terminal device, random access to the second cell.

3. The method of claim 1, wherein the first cell is one of: a current camping cell supporting the first network slice information and satisfying a first preset condition; or a neighboring cell supporting the first network slice information and satisfying a first preset condition,
wherein the first preset condition comprises at least one of:
the first cell satisfying an S criterion;
channel quality of the first cell being higher than a channel quality threshold;
a duration within which the channel quality of the first cell is higher than the channel quality threshold being greater than or equal to a first duration; or
a frequency priority of the first cell being the highest.

4. The method of any one of claims 1 to 3, wherein the terminal device performs the cell reselection based on the first network slice information in at least one of the following cases:
the current camping cell not supporting the first network slice information;
the neighboring cell supporting the first network slice information;
a priority of supporting the first network slice information by the neighboring cell being higher than a priority of supporting the first network slice information by the current camping cell;
a service corresponding to the first network slice information being Mobile Original, MO, service or MO data service;
the first network slice information being not allowed network slice information;
the first network slice information being obtained;
the first network slice information being obtained before performing the random access, or before transmitting a message, MSG, 1, or before transmitting an MSGA; or
the cell reselection being supported by the terminal device.

5. The method of claim 4, wherein the first network slice information being obtained comprises:
the first network slice information being obtained after obtaining required second network slice information.

6. The method of any one of claims 1 to 5, wherein the first network slice information comprises one piece of network slice information.

7. The method of claim 4, wherein the service corresponding to the first network slice information being the MO service or the MO data service comprises:
the service corresponding to the first network slice information being the MO service, and the MO service being supported by at least one of the current camping cell or the neighboring cell; or
the service corresponding to the first network slice information being the MO data service, and the MO data service being supported by at least one of the current camping cell or the neighboring cell.

8. The method of claim 1, wherein performing, by the terminal device, the random access based on the required first network slice information further comprises:
in response to determining that a current camping cell does not support the first network slice information, initiating (S308), by the terminal device, random access to the current camping cell based on a legacy resource of the current camping cell or a reserved slice resource of the current camping cell.

9. The method of any one of claims 1 to 8, further comprising:
in response to determining that a current camping cell does not support the first network slice information, transmitting slice requirement information to a network device,
wherein the slice requirement information comprises:
information indicating that the current camping cell does not support the first network slice information; or
the first network slice information.

10. The method of any one of claims 1 to 9, wherein the method further comprises: before performing (S101) the random access based on the required first network slice information,
obtaining (S301), by the terminal device, the first network slice information sent by a network device.

11. The method of claim 10, wherein obtaining, by the terminal device, the first network slice information comprises:
obtaining, by the terminal device, the first network slice information before transmitting a message, MSG, 1 or an MSGA to the network device, or before triggering a random access procedure.

12. A terminal device (20), comprising:
a processor (2002); and
a memory (2001) for storing a computer program executable by the processor,
wherein the processor is configured to execute the computer program to cause the terminal device to perform the steps of the method of any one of claims 1 to 11.

13. A non-transitory computer-readable storage medium, having stored thereon a computer program that, when executed by one or more processors associated with a terminal device, causes the terminal device to perform the steps of the method of any one of claims 1 to 11.

## Patentansprüche

1. Verfahren für Direktzugriff, umfassend:
Durchführen (S101) eines Direktzugriffs durch eine Endgerätevorrichtung auf der Grundlage der erforderlichen ersten Netzwerk-Slice-Informationen, **dadurch gekennzeichnet, dass** es umfasst:
Durchführen (S201) einer Zellenneuauswahl durch die Endgerätevorrichtung auf der Grundlage der ersten Netzwerk-Slice-Informationen, um eine erste Zelle zu erhalten, falls diese Neuauswahlanzeigeinformationen empfangen werden,
wobei die erste Zelle eine aktuelle Campingzelle ist, die die ersten Netzwerk-Slice-Informationen unterstützt, oder eine benachbarte Zelle, die die ersten Netzwerk-Slice-Informationen unterstützt; und
wobei die Neuauswahlanzeigeinformationen eingesetzt werden, um die Endgerätevorrichtung anzuweisen, die Zellenneuauswahl durchzuführen, und die ersten Netzwerksegmentinformationen umfassen; und
Initiieren (S202) eines Direktzugriffs auf die erste Zelle durch die Endgerätevorrichtung basierend auf einer Zugriffsressource der ersten Zelle, die den ersten Netzwerk-Slice-Informationen entspricht.

2. Verfahren nach Anspruch 1, wobei das Durchführen des Direktzugriffs durch die Endgerätevorrichtung auf der Grundlage der erforderlichen ersten Netzwerk-Slice-Informationen ferner umfasst:
als Reaktion auf das Bestimmen, dass die Zellenneuauswahl fehlgeschlagen ist, Erhalten einer zweiten Zelle durch die Endgerätevorrichtung nach einem herkömmlichen Zellenneuauswahlkriterium; und
Initiieren eines Direktzugriffs auf die zweite Zelle durch die Endgerätevorrichtung.

3. Verfahren nach Anspruch 1, wobei die erste Zelle eine ist aus einer aktuellen Campingzelle, die die ersten Netzwerk-Slice-Informationen unterstützt und eine erste voreingestellte Bedingung erfüllt; und einer benachbarten Zelle, die die ersten Netzwerk-Slice-Informationen unterstützt und eine erste voreingestellte Bedingung erfüllt,
wobei die erste voreingestellte Bedingung mindestens eines umfasst aus:
die erste Zelle erfüllt ein S-Kriterium;
die Kanalqualität der ersten Zelle ist höher als ein Kanalqualitätsschwellenwert;
eine Dauer, innerhalb derer die Kanalqualität der ersten Zelle höher ist als der Kanalqualitätsschwellenwert, ist länger oder gleich einer ersten Dauer; oder
eine Frequenzpriorität der ersten Zelle ist die höchste.

4. Verfahren nach einem der Ansprüche 1 bis 3, wobei die Endgerätevorrichtung die Zellenneuauswahl basierend auf den ersten Netzwerk-Slice-Informationen in mindestens einem der folgenden Fälle durchführt:
die aktuelle Campingzelle unterstützt die ersten Netzwerk-Slice-Informationen nicht;
die benachbarte Zelle unterstützt die ersten Netzwerk-Slice-Informationen;
eine Priorität der Unterstützung der ersten Netzwerk-Slice-Informationen durch die benachbarte Zelle ist höher als eine Priorität der Unterstützung der ersten Netzwerk-Slice-Informationen durch die aktuelle Campingzelle;
ein Dienst, der den ersten Netzwerk-Slice-Informationen entspricht, ist ein Mobile-Original(MO)-Dienst oder ein MO-Datendienst;
die ersten Netzwerk-Slice-Informationen sind keine zulässigen Netzwerk-Slice-Informationen;
die ersten Netzwerk-Slice-Informationen werden erhalten; die ersten Netzwerk-Slice-Informationen werden vor der Durchführung des Direktzugriffs oder vor der Übertragung einer Nachricht (MSG, 1) oder vor der Übertragung einer MSGA erhalten; oder
die Zellenneuauswahl wird von der Endgerätevorrichtung unterstützt.

5. Verfahren nach Anspruch 4, wobei die ersten erhaltenen Netzwerk-Slice-Informationen umfassen:
die ersten Netzwerk-Slice-Informationen werden nach dem Erhalten von erforderlichen zweiten Netzwerk-Slice-Informationen erhalten.

6. Verfahren nach einem der Ansprüche 1 bis 5, wobei die ersten Netzwerk-Slice-Informationen eine Netzwerk-Slice-Information umfassen.

7. Verfahren nach Anspruch 4, wobei der Dienst, der den ersten Netzwerk-Slice-Informationen entspricht, der MO-Dienst oder der MO-Datendienst ist, umfasst:
wobei der Dienst, der den ersten Netzwerk-Slice-Informationen entspricht, der MO-Dienst ist und der MO-Dienst von mindestens einer der aktuellen Campingzelle und der benachbarten Zelle unterstützt wird; oder
wobei der Dienst, der den ersten Netzwerk-Slice-Informationen entspricht, der MO-Datendienst ist und der MO-Datendienst von mindestens einer der aktuellen Campingzelle und der benachbarten Zelle unterstützt wird.

8. Verfahren nach Anspruch 1, wobei das Durchführen des Direktzugriffs durch die Endgerätevorrichtung auf der Grundlage der erforderlichen ersten Netzwerk-Slice-Informationen ferner umfasst:
als Reaktion auf das Bestimmen, dass eine aktuelle Campingzelle die ersten Netzwerk-Slice-Informationen nicht unterstützt, Initiieren (S308) eines Direktzugriffs auf die aktuelle Campingzelle durch die Endgerätevorrichtung basierend auf einer Legacy-Ressource der aktuellen Campingzelle oder einer reservierten Slice-Ressource der aktuellen Campingzelle.

9. Verfahren nach einem der Ansprüche 1 bis 8, ferner umfassend:
als Reaktion auf das Bestimmen, dass eine aktuelle Campingzelle die ersten Netzwerk-Slice-Informationen nicht unterstützt, Übertragen von Slice-Anforderungsinformationen an eine Netzwerkvorrichtung,
wobei die Slice-Anforderungsinformationen umfassen:
Informationen, die anzeigen, dass die aktuelle Campingzelle die ersten Netzwerk-Slice-Informationen nicht unterstützt; oder
die ersten Netzwerk-Slice-Informationen.

10. Verfahren nach einem der Ansprüche 1 bis 9, wobei Verfahren ferner umfasst: vor dem Durchführen (S101) des Direktzugriffs auf der Grundlage der erforderlichen ersten Netzwerk-Slice-Informationen,
Erhalten (S301) der ersten von einer Netzwerkvorrichtung gesendeten Netzwerk-Slice-Informationen durch die Endgerätevorrichtung.

11. Verfahren nach Anspruch 10, wobei das Erhalten der ersten Netzwerk-Slice-Informationen durch die Endgerätevorrichtung umfasst:
Erhalten der ersten Netzwerk-Slice-Informationen durch die Endgerätevorrichtung, bevor eine Nachricht (MSG, 1) oder eine MSGA an die Netzwerkvorrichtung gesendet oder ein Direktzugriffsverfahren ausgelöst wird.

12. Endgerätevorrichtung (20), umfassend:
einen Prozessor (2002); und
einen Speicher (2001) zum Speichern eines vom Prozessor ausführbaren Computerprogramms,
wobei der Prozessor dazu konfiguriert ist, das Computerprogramm auszuführen, um die Endgerätevorrichtung zu veranlassen, die Schritte des Verfahrens nach einem der Ansprüche 1 bis 11 auszuführen.

13. Nichtflüchtiges, computerlesbares Speichermedium, auf dem ein Computerprogramm gespeichert ist, das, wenn von einem oder mehreren Prozessoren ausgeführt, die mit einer Endgerätevorrichtung verbunden sind, die Endgerätevorrichtung dazu veranlassen, die Schritte des Verfahrens nach einem der Ansprüche 1 bis 11 auszuführen.

## Revendications

1. Procédé pour l'accès aléatoire, comprenant les étapes consistant à :
effectuer (S101), par un dispositif terminal, un accès aléatoire sur la base d'une première information de tranche de réseau exigée, **caractérisé en ce que** cela comprend :
effectuer (S201), par le dispositif terminal, une resélection de cellule sur la base de la première information de tranche de réseau pour obtenir une première cellule dans le cas où une information d'indication de resélection est reçue,
dans lequel la première cellule est une cellule de résidence actuelle prenant en charge la première information de tranche de réseau ou une cellule voisine prenant en charge la première information de tranche de réseau ; et
dans lequel l'information d'indication de resélection est utilisée pour ordonner au dispositif terminal d'effectuer la resélection de cellule, et comprend la première information de tranche de réseau ; et
lancer (S202), par le dispositif terminal, un accès aléatoire à la première cellule sur la base d'une ressource d'accès de la première cellule correspondant à la première information de tranche de réseau.

2. Procédé selon la revendication 1, dans lequel l'exécution, par le dispositif terminal, de l'accès aléatoire sur la base de la première information de tranche de réseau exigée comprend également les étapes consistant à :
en réponse à la détermination du fait que la resélection de cellule a échoué, obtenir, par le dispositif terminal, une deuxième cellule selon un critère de resélection de cellule classique ; et
lancer, par le dispositif terminal, l'accès aléatoire à la deuxième cellule.

3. Procédé selon la revendication 1, dans lequel la première cellule est l'une des suivantes : une cellule de résidence actuelle prenant en charge la première information de tranche de réseau et vérifiant une première condition prédéfinie ; ou une cellule voisine prenant en charge la première information de tranche de réseau et vérifiant une première condition prédéfinie,
dans lequel la première condition prédéfinie comprend au moins une des suivantes :
la première cellule vérifie un critère S ;
la qualité de canal de la première cellule est supérieure à un seuil de qualité de canal ;
une durée au cours de laquelle la qualité de canal de la première cellule est supérieure au seuil de qualité de canal est supérieure ou égale à une première durée ; ou
une priorité de fréquence de la première cellule est la plus élevée.

4. Procédé selon l'une quelconque des revendications 1 à 3, dans lequel le dispositif terminal effectue la resélection de cellule sur la base de la première information de tranche de réseau dans au moins un des cas suivants :
la cellule de résidence actuelle ne prend pas en charge la première information de tranche de réseau ;
la cellule voisine prend en charge la première information de tranche de réseau ;
une priorité de la prise en charge de la première information de tranche de réseau par la cellule voisine est supérieure à une priorité de la prise en charge de la première information de tranche de réseau par la cellule de résidence actuelle ;
un service correspondant à la première information de tranche de réseau est un service original de mobile, MO ou un service de données MO ;
la première information de tranche de réseau est une information de tranche de réseau non autorisée ;
la première information de tranche de réseau est obtenue ;
la première information de tranche de réseau est obtenue avant l'exécution de l'accès aléatoire ou avant la transmission d'un message, MSG, 1 ou avant la transmission d'un MSGA ; ou
la resélection de cellule est prise en charge par le dispositif terminal.

5. Procédé selon la revendication 4, dans lequel l'obtention de la première information de tranche de réseau comprend :
la première information de tranche de réseau est obtenue après l'obtention d'une deuxième information de tranche de réseau exigée.

6. Procédé selon l'une quelconque des revendications 1 à 5, dans lequel la première information de tranche de réseau comprend un morceau d'information de tranche de réseau.

7. Procédé selon la revendication 4, dans lequel le fait que le service correspondant à la première information de tranche de réseau soit le service MO ou le service de données MO comprend :
le service correspondant à la première information de tranche de réseau est le service MO, et le service MO est pris en charge par au moins une cellule parmi la cellule de résidence actuelle et la cellule voisine ; ou
le service correspondant à la première information de tranche de réseau est le service de données MO, et le service de données MO est pris en charge par au moins une cellule parmi la cellule de résidence actuelle et la cellule voisine.

8. Procédé selon la revendication 1, dans lequel l'exécution, par le dispositif terminal, de l'accès aléatoire sur la base de la première information de tranche de réseau exigée comprend également l'étape consistant à :
en réponse à la détermination du fait qu'une cellule de résidence actuelle ne prend pas en charge la première information de tranche de réseau, lancer (S308), par le dispositif terminal, un accès aléatoire à la cellule de résidence actuelle sur la base d'une ressource classique de la cellule de résidence actuelle ou d'une ressource de tranche réservée de la cellule de résidence actuelle.

9. Procédé selon l'une quelconque des revendications 1 à 8, comprenant également l'étape consistant à :
en réponse à la détermination du fait qu'une cellule de résidence actuelle ne prend pas en charge la première information de tranche de réseau, transmettre une information d'exigence de tranche à un dispositif de réseau,
dans lequel l'information d'exigence de tranche comprend :
une information indiquant que la cellule de résidence actuelle ne prend pas en charge la première information de tranche de réseau ; ou
la première information de tranche de réseau.

10. Procédé selon l'une quelconque des revendications 1 à 9, le procédé comprenant également l'étape consistant à : avant l'exécution (S101) de l'accès aléatoire sur la base de la première information de tranche de réseau exigée,
obtenir (S301), par le dispositif terminal, la première information de tranche de réseau envoyée par un dispositif de réseau.

11. Procédé selon la revendication 10, dans lequel l'obtention, par le dispositif terminal, de la première information de tranche de réseau comprend l'étape consistant à :
obtenir, par le dispositif terminal, la première information de tranche de réseau avant la transmission d'un message, MSG, 1 ou d'un MSGA au dispositif de réseau, ou avant le déclenchement d'une procédure d'accès aléatoire.

12. Dispositif terminal (20), comprenant :
un processeur (2002) ; et
une mémoire (2001) servant à stocker un programme informatique exécutable par le processeur,
dans lequel le processeur est configuré pour exécuter le programme informatique pour amener le dispositif terminal à réaliser les étapes du procédé selon l'une quelconque des revendications 1 à 11.

13. Support de stockage non transitoire lisible par ordinateur, sur lequel est stocké un programme informatique qui, lorsqu'il est exécuté par un ou plusieurs processeurs associés à un dispositif terminal, amène le dispositif terminal à réaliser les étapes du procédé selon l'une quelconque des revendications 1 à 11.
